# EUROPEAN PATENT APPLICATION

(11) **EP 3 912 784 A1**
(43) Date of publication of application: **24.11.2021**
(21) Application number: 20741228.9
(22) Date of filing: 17.01.2020
(51) Int. Cl.: B29C 33/58, B29C 33/62, B29C 33/64

(54) **MOLDING DIE FOR MANUFACTURING COMPOSITE MATERIAL MOLDED PRODUCT AND METHOD FOR MANUFACTURING COMPOSITE MATERIAL MOLDED PRODUCT**

(30) Priority: 17.01.2019 US 201962793467 P
(71) Applicant: Kawasaki Jukogyo Kabushiki Kaisha, Hyogo 650-8670 (JP)
(72) Inventor: SANA, Toshikazu, Hyogo 650-8670 (JP); OGASAWARA, Shodo, Hyogo 650-8670 (JP)
(74) Representative: Leinweber & Zimmermann
(86) International application number: PCT/JP2020/001515
(87) International publication number: WO 2020/149402

(57) **Abstract**

A composite material shaped product manufacturing shaping die is used when manufacturing a composite material shaped product constituted by at least a resin composition and a fiber material. The composite material shaped product is formed by shaping, by the shaping die, a laminated body of prepregs each formed by impregnating the fiber material with the resin composition. The shaping die includes a die member having a shaping surface defining an outer surface shape of the laminated body. The shaping surface of the die member includes: a release coating covering the shaping surface; and a release agent layer formed on the release coating by applying a release agent to the release coating.

## Description

### Technical Field

The present invention relates to a shaping die used to manufacture a composite material shaped product and a method of manufacturing the composite material shaped product, and particularly to a shaping die for a composite material shaped product and a method of manufacturing the composite material shaped product each of which can realize an excellent release property and excellent surface quality of the obtained composite material shaped product.

### Background Art

In recent years, fiber-reinforced resin composite materials (hereinafter suitably abbreviated as "composite materials") are widely used in fields in which metal materials have been used. For example, a carbon-fiber reinforced material (carbon fiber reinforced plastic; CFRP) is smaller in weight and higher in strength than the metal material, the carbon-fiber reinforced material being formed in such a manner that: carbon fiber is used as reinforced fiber; and the carbon fiber is impregnated with matrix resin, such as epoxy resin, and is then shaped. Therefore, shaped products (composite material shaped products) made of composite materials, such as CFRP, are adopted in various fields, such as an aerospace field, a sports goods field, an industrial machine field, an automobile field, and a bicycle field.

A typical method of manufacturing (or shaping) the composite material shaped product is a method of: laminating prepregs (each formed in such a manner that a fiber material is impregnated with a thermosetting resin composition or a thermoplastic resin composition, which is a matrix material, and is then semi-cured) in accordance with a desired shape to form a laminated body; placing the laminated body at a cavity in a shaping die; shaping the laminated body generally by heating and pressurizing; and removing the composite material shaped product from the shaping die.

Normally, a release agent is applied to a shaping surface of the shaping die such that the composite material shaped product is successfully removed from the shaping die. Although it depends on the type of the composite material shaped product, the shaping and the removing can be performed several times to several tens of times by applying the release agent to the shaping surface once. However, especially in an aircraft field, high safety and high reliability are required. Therefore, when the composite material shaped product is an aircraft part, the shaping surface of the shaping die needs to be cleaned (washed) and subjected to the application of the release agent each time the composite material shaped product (aircraft part) is shaped and removed.

For example, in PTL 1, a skin panel of a body portion of an aircraft is described as the composite material shaped product, and a cylindrical mandrel is described as the shaping die. After the composite material shaped product (skin panel) is removed from the mandrel, foreign matters adhering to the surface (shaping surface) of the shaping die are removed, and the release agent is applied to the surface for the next work. The cleaning (washing) of the shaping surface and the application of the release agent to the shaping surface are collectively regarded as a releasing treatment. In this case, if the releasing treatment with respect to the shaping die is inadequate, the aircraft part as the composite material shaped product cannot be appropriately removed from the shaping die, and the aircraft part which was not appropriately removed cannot realize required quality, and therefore, is discarded.

### Citation List

### Patent Literature

PTL 1: U.S. Patent No. 9409361

### Summary of Invention

### Technical Problem

Performing the releasing treatment with respect to the shaping die each time the aircraft part that is the composite material shaped product is removed from the shaping die as in conventional cases extremely complicates the process of manufacturing the aircraft part. As described above, when manufacturing the composite material shaped product in fields other than the aircraft field, the removing can be performed several times to several tens of times by performing the releasing treatment once. However, in the aircraft field, parts to be manufactured are expensive, and a production cycle time needs to be maintained. Therefore, the release agent needs to be applied to the shaping surface each time the removing is performed. On this account, man-hours increase by the application work. Moreover, since the release agent is applied each time the removing is performed, the release agent, the amount of which corresponds to the frequency of use, needs to be purchased. This leads to an increase in manufacturing cost.

Moreover, the present inventors have diligently studied and found that when the release agent is repeatedly applied each time the removing is performed, the release agent is deposited on the shaping surface.

It is generally known that when shaping a shaped product by a shaping die regardless of whether or not the shaped product is the composite material shaped product, by excessive application of the release agent to the shaping surface, the release agent is deposited on the shaping surface, and this becomes a cause of, for example, contamination of the shaping surface. Since the deposition of the release agent may affect dimensional accuracy, surface quality, appearance, and the like of the shaped product, cleaning work needs to be regularly performed.

When the composite material shaped product is the aircraft part, a required quality level of the aircraft part is higher than that of a general composite material shaped product. Therefore, even when the deposition of the release agent is slight, this may affect the aircraft part. For example, when the smoothness of the shaping surface deteriorates by the deposition of the release agent, the surface roughness of the obtained aircraft part deteriorates.

In addition, the present inventors have studied and found that the release agent deposited on the shaping surface is transferred to the surface of the aircraft part. When the release agent is transferred to the surface of the aircraft part, ultrasonic inspection of the aircraft part is disturbed by the release agent. Moreover, when the release agent is transferred to the surface of the aircraft part, this affects painting of the aircraft part. Therefore, before the ultrasonic inspection or the painting, the release agent needs to be eliminated from the surface of the aircraft part by washing or cleaning.

When the amount of application of the release agent is reduced in order to reduce the amount of deposition of the release agent, this may affect a removing property of the aircraft part. As described above, when the aircraft part is not appropriately removed from the shaping die, the aircraft part is discarded. Therefore, it is difficult to reduce the amount of application of the release agent. On this account, the release agent needs to be adequately applied to the shaping surface each time the shaping die is used. Moreover, the shaping surface needs to be polished and cleaned before the shaping surface adversely affects the quality of the aircraft part. Thus, man-hours increase by not only the application work of the release agent but also the cleaning work.

The present invention was made to solve the above problems, and an object of the present invention is to provide a shaping die for manufacturing a composite material shaped product, the shaping die being capable of realizing successful removing of the shaped product by a release agent, avoiding execution of a releasing treatment each time the removing is performed, and suppressing deposition of the release agent.

### Solution to Problem

To solve the above problems, a composite material shaped product manufacturing shaping die according to the present invention is a shaping die used to, when manufacturing a composite material shaped product constituted by at least a resin composition and a fiber material, shape a laminated body of prepregs each formed by impregnating the fiber material with the resin composition. The shaping die includes a die member including a shaping surface defining an outer surface shape of the laminated body. The shaping surface includes a release coating covering the shaping surface and a release agent layer formed on the release coating by applying a release agent to the release coating.

Moreover, to solve the above problems, a method of manufacturing a composite material shaped product according to the present invention is a method of manufacturing a composite material shaped product constituted by at least a resin composition and a fiber material. The method includes: covering a shaping surface with a release coating, the shaping surface defining an outer surface shape of a laminated body of prepregs each formed by impregnating the fiber material with the resin composition; applying a release agent to the release coating to form a release agent layer on the release coating; and shaping the laminated body in a state where an outer surface of the laminated body is in tight contact with the release agent layer.

According to the above configuration, the release coating is formed on the shaping surface in advance, and the release agent layer is formed on the release coating. To be specific, the shaping surface of the shaping die is subjected to the double coating, i.e., the release coating and the release agent layer are formed on the shaping surface of the shaping die. By this double coating, the excellent removing property can be maintained. Moreover, since it is unnecessary to apply the release agent each time the removing is performed, the frequency of application of the release agent can be reduced. Furthermore, the deposition of the release agent can be adequately suppressed. Since the formation of the release coating is only required to be performed basically only once, the execution of the releasing treatment each time the removing is performed can be avoided. With this, the composite material shaped product manufacturing shaping die can be obtained, which realizes the successful removing by the release agent, avoids the execution of the releasing treatment each time the removing is performed, and can suppress the deposition of the release agent.

The above object, other objects, features, and advantages of the present invention will be made clear by the following detailed explanation of preferred embodiments with reference to the attached drawings.

### Advantageous Effects of Invention

By the above configuration, the present invention obtains an effect of being able to provide the composite material shaped product manufacturing shaping die which realizes the successful removing by the release agent, avoids the execution of the releasing treatment each time the removing is performed, and can suppress the deposition of the release agent.

### Brief Description of Drawings

FIG. 1A is a schematic perspective view showing one example of a shaping die according to an embodiment of the present invention. FIG. 1B is a schematic process diagram showing one example of a method of manufacturing the shaping die shown in FIG. 1A.
FIGS. 2A and 2B are schematic perspective views showing typical examples of the shaping dies according to other embodiments of the present invention.
FIG. 3A is a schematic partial sectional view showing another example of the shaping die shown in FIG. 1A. FIG. 3B is a schematic partial sectional view showing that a release coating that is an upper layer in the shaping die shown in FIG. 3A is partially peeled off.

### Description of Embodiments

Hereinafter, a typical embodiment of the present invention will be described with reference to the drawings. In the following description and the drawings, the same reference signs are used for the same or corresponding components, and the repetition of the same explanation is avoided.

### Composite Material Shaped Product

First, one example of a composite material shaped product manufactured by a composite material shaped product manufacturing shaping die (hereinafter suitably abbreviated as a "shaping die") according to the present disclosure will be specifically described.

The composite material shaped product according to the present disclosure is constituted by at least a resin composition and a fiber material and is manufactured in such a manner that a laminated body of prepregs each formed by impregnating the fiber material with the resin composition is shaped by a shaping die. In the present disclosure, a typical example of the composite material shaped product is an aircraft part. Typical examples of the aircraft part include skins, beams, frames, stringers, and clips. Moreover, examples of the sectional shapes of long members, such as beams, frames, and stringers, include a Z shape, a C shape, an L shape, and a hat shape (Ω shape).

In the present disclosure, specific types of the resin composition and the fiber material constituting a composite material layer are not especially limited, and materials applicable to the aircraft parts can be suitably selected and used. The resin composition is only required to contain a resin material which can be used as a matrix material (parent material) that supports the fiber material (a base material of the composite material shaped product). Specific examples of the resin material include thermosetting resin and thermoplastic resin.

A specific type of the thermosetting resin is not especially limited. Typical examples of the thermosetting resin include epoxy resin, polyester resin, vinylester resin, phenol resin, cyanate ester resin, polyimide resin, and polyamide resin. These thermosetting resins may be used alone or in combination of plural types. Moreover, a more specific chemical structure of the thermosetting resin is not especially limited, and the thermosetting resin may be a polymer formed by polymerizing various known monomers or may be a copolymer formed by polymerizing a plurality of monomers. Moreover, an average molecular weight, structures of a main chain and a side chain, and the like are not especially limited.

A specific type of the thermoplastic resin is not especially limited. However, especially in the field of aircraft parts, engineering plastic, such as polyphenylene sulfide (PPS), polyether ether ketone (PEEK), and polyether imide (PEI), are preferably used. A more specific chemical structure of the thermoplastic resin is not especially limited, and the thermoplastic resin may be a polymer formed by polymerizing various known monomers or may be a copolymer formed by polymerizing a plurality of monomers. Moreover, an average molecular weight, structures of a main chain and a side chain, and the like are not especially limited.

The matrix material of the composite material may be constituted by only the above thermosetting resin or the above thermoplastic resin (i.e., the matrix material may be constituted by only a known resin material). However, the matrix material may contain known curing agents, known curing accelerators, known reinforcing materials and fillers other than the fiber material, and other known additives. Specific types, compositions, and the like of the additives, such as the curing agents and the curing accelerators, are not especially limited, and the additive of a known type or composition may be suitably used.

To be specific, in the present disclosure, the matrix material may be a thermosetting resin composition containing the thermosetting resin and other components or may be a thermoplastic resin composition containing the thermoplastic resin and other components. Therefore, in the present disclosure, the composite material may be a "thermosetting" material constituted by the fiber material and the thermosetting resin or by the fiber material and the thermosetting resin composition or may be a "thermoplastic" material constituted by the fiber material and the thermoplastic resin or by the fiber material and the thermoplastic resin composition.

A specific type of the fiber material is not especially limited as long as the fiber material can realize satisfactory physical properties (such as strength) of the base material of the composite material shaped product. Examples of the fiber material include carbon fiber, polyester fiber, PBO (polyparaphenylene benzobisoxazole) fiber, boron fiber, aramid fiber, glass fiber, silica fiber (quartz fiber), silicon carbide (SiC) fiber, and nylon fiber. These fiber materials may be used alone or in combination of two or more. Among these, the carbon fiber is preferably used especially in the field of aircrafts. Moreover, the form of usage of the fiber material is not especially limited, but the fiber material is typically constituted as braid, woven fabric, knit fabric, nonwoven fabric, or the like.

According to the composite material shaped product of the present disclosure, the laminated body of the prepregs each formed by impregnating the fiber material with the resin composition is shaped by the shaping die. The prepregs are sheet bodies each formed such that the base material constituted by the fiber material is impregnated with the thermosetting resin composition or the thermoplastic resin composition and is then semi-cured. A specific configuration of the prepreg is not especially limited. Moreover, a specific configuration of the laminated body formed by laminating the prepregs is not especially limited. For example, the shape of the prepreg, the number of prepregs laminated, a direction in which the prepregs are laminated, and the like can be suitably set in accordance with the shape, usage, type, and the like of the composite material shaped product (such as the aircraft part) to be manufactured.

Moreover, the laminated body may include another material layer other than the prepregs (composite material layers). To be specific, the composite material shaped product according to the present disclosure may include another material other than the composite material. For example, a resin layer made of resin (or a resin composition) having stretchability may be laminated on the surface of the laminated body. The laminated body including such resin layer is shaped by heating and pressurizing, and with this, the composite material shaped product including the surface on which the resin layer is formed can be manufactured. A purpose of forming the resin layer on the surface of the composite material shaped product is, for example, to give machinability (for example, to prevent the generation of burrs, splinters, and the like at the time of drilling) or to improve the appearance of the composite material shaped product, but is not especially limited.

Moreover, the laminated body may include a metal mesh layer or metal foil as the above-described another material layer. For example, a copper mesh layer may be laminated on the surface of the laminated body. When the laminated body including the copper mesh layer is shaped by heating and pressurizing, the composite material shaped product including the surface on which copper mesh is formed can be manufactured. When the composite material shaped product is the aircraft part, the copper mesh layer can be used for a lightning protection measure in the aircraft part. It should be noted that specific types and usages of the metal mesh layer and the metal foil are not especially limited.

### Composite Material Shaped Product Manufacturing Shaping Die

The composite material shaped product manufacturing shaping die according to the present disclosure is used to shape the laminated body of the prepregs when manufacturing the above-described composite material shaped product. A specific shape of the shaping die is not especially limited and is suitably set in accordance with the type of the composite material shaped product to be manufactured, such as the type of the aircraft part. In the present disclosure, a shaping surface of the shaping die includes: a release coating covering the shaping surface; and a release agent layer formed by applying a release agent to the release coating. To be specific, the shaping surface of the shaping die is subjected to double coating, i.e., the release coating and the release agent layer are formed on the shaping surface of the shaping die.

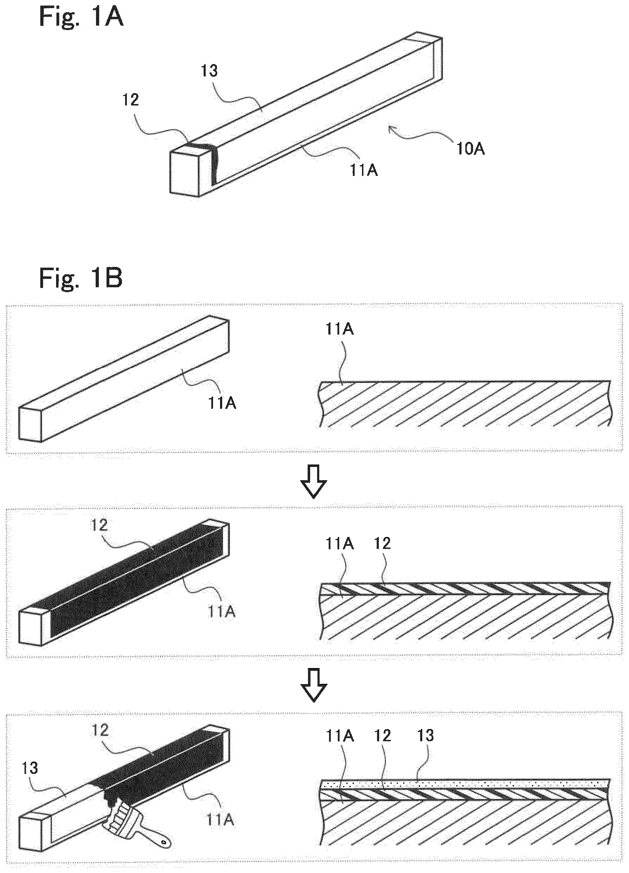

One example of the shaping die according to the present disclosure will be specifically described with reference to FIGS. 1A and 1B. FIG. 1A shows a beam shaping die 10A that is one example of the shaping die according to the present disclosure. A beam manufactured by the beam shaping die 10A is an aircraft part constituting a frame member of an aircraft. The beam shaping die 10A shown in FIG. 1A includes: a shaping die main body 11A schematically shown in FIG. 1A to have a rectangular solid shape (quadrangular prism shape); a release coating 12 formed on a surface (shaping surface) of the shaping die main body 11A; and a release agent layer 13 laminated on the release coating 12.

It should be noted that, for convenience sake, FIG. 1A schematically shows that part of the release agent layer 13 that is an outermost surface is peeled off (i.e., a side edge portion of one end portion of the shaping die main body 11A is peeled off), and therefore, part of the release coating 12 is exposed. Moreover, for convenience sake, in FIGS. 1A and 1B, the release coating 12 is shown in black so as to be clearly distinguished from the release agent layer 13, and the release agent layer 13 is shown as a white layer. However, needless to say, the colors of the release coating 12 and the release agent layer 13 are not limited to these.

FIG. 1B is a process diagram schematically showing a method of manufacturing the beam shaping die 10A shown in FIG. 1A (or a preparation method for the shaping). In FIG. 1B, the manufacturing method (preparation method) of the beam shaping die 10A is schematically shown as three stages. In each of the stages shown in FIG. 1B, a perspective view of the shaping die main body 11A is shown at a left side, and a schematic partial sectional view of part of the surface of the shaping die main body 11A is shown at a right side.

An upper stage of FIG. 1B shows the shaping die main body 11A on which the release coating 12 is not yet formed. In the perspective view at the left side and the partial sectional view at the right side in the upper stage of FIG. 1B, the shaping surface (surface) of the shaping die main body 11A is covered with nothing. A middle stage of FIG. 1B shows that the release coating 12 is formed on the shaping surface of the shaping die main body 11A. As described above, in the perspective view of the shaping die main body 11A at the left side in the middle stage of FIG. 1B, the release coating 12 is shown in black for convenience sake. In the partial sectional view at the right side in the middle stage of FIG. 1B, the number of release coatings 12 is only one but may be two or more as described below. A method of forming the release coating 12 is not especially limited, and various known forming methods can be suitably used in accordance with various conditions, such as the material of the release coating 12.

A lower stage of FIG. 1B shows that the release agent layer 13 is applied to the release coating 12 of the shaping surface of the shaping die main body 11A. The perspective view of the shaping die main body 11A at the left side in the lower stage of FIG. 1B schematically shows that the release agent is applied (painted) by using a brush. Moreover, as described above, the release agent layer 13 is shown in white so as to be clearly distinguished from the release coating 12. It should be noted that the applying method (painting method) of the release agent is not limited to the method using the brush shown in FIG. 1B, and various known applying methods can be suitably used in accordance with various conditions, such as the material of the release agent. With this, as shown in the partial sectional view at the right side in the lower stage of FIG. 1B, the shaping surface of the shaping die main body 11A is subjected to the double coating, i.e., the release coating 12 is laminated at the lower side, and the release agent layer 13 is laminated on the release coating 12.

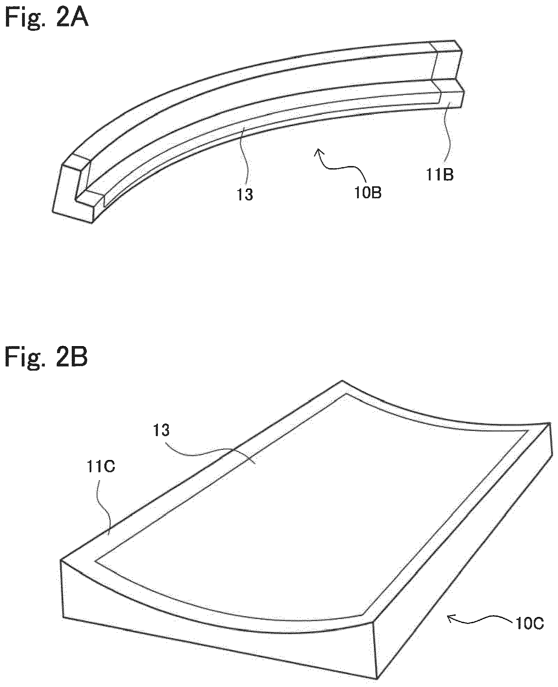

A specific type of the shaping die to which the double coating of the present disclosure is applicable is not limited to the beam shaping die 10A shown in FIG. 1A, and the double coating of the present disclosure is applicable to various known shaping dies. Specifically, other examples of the shaping die according to the present disclosure include: a frame shaping die 10B shown in FIG. 2A; and a skin shaping die 10C shown in FIG. 2B and configured to shape a body skin or a wing skin.

In the frame shaping die 10B shown in FIG. 2A, a shaping die main body 11B is curved in accordance with the shape of a frame, and the shaping surface (surface) includes level differences. In the frame shaping die 10B shown in FIG. 2A, the shaping surface of the shaping die main body 11B includes a plurality of level differences in order to manufacture a Z-shaped frame, and the shaping surface is subjected to the double coating. As with the beam manufactured by the beam shaping die 10A, the frame manufactured by the frame shaping die 10B is an aircraft part constituting a frame member of an aircraft.

In the skin shaping die 10C shown in FIG. 2B, the shaping surface (surface) of a shaping die main body 11C is a curved surface that is concave in accordance with the shape of the skin. The curved surface is only required to correspond to the shape of the skin, and for example, may be a primary curved surface, such as a partial cylindrical surface, or a secondary curved surface, such as a partial spherical shape. In the frame shaping die 10C shown in FIG. 2B, the curved surface (shaping surface) is subjected to the double coating. The skin manufactured by the skin shaping die 10C is an aircraft part constituting a body or a wing of an aircraft.

It should be noted that in each of the frame shaping die 10B shown in FIG. 2A and the skin shaping die 10C shown in FIG. 2B, only the release agent layer 13 is shown on the shaping surface for convenience sake. However, actually, each of the shaping surface of the frame shaping die 10B and the shaping surface of the skin shaping die 10C is subjected to the double coating. Therefore, although not shown, in each of FIGS. 2A and 2B, at least one release coating 12 is formed under the release agent layer 13.

It should be noted that the shaping die to which the double coating of the present disclosure is applicable is not limited to the shaping die configured to manufacture the aircraft part, and needless to say, the double coating of the present disclosure is applicable to the other shaping dies configured to manufacture the other parts. It should be noted that the double coating of the present disclosure is especially suitably applicable to shaping dies configured to manufacture shaped products, such as the aircraft parts, which require higher quality than general composite material shaped products.

In the present disclosure, the shaping die is only required to include the shaping surface which defines an outer surface shape of the laminated body. When the shaping die is constituted by a plurality of members, the shaping die is only required to include a die member having at least a shaping surface. For example, when the shaping die is constituted by only a male die and a female die, an outer surface of the male die is a shaping surface, and an inner surface of the female die is a shaping surface. Therefore, each of the male die and the female die corresponds to the "die member." On the other hand, when the shaping die includes a lid member in addition to the male die and the female die, and the lid member is a member configured to simply seal a cavity constituted by these die members, the lid member does not necessarily have the shaping surface. In this case, the lid member does not correspond to the die member.

The release coating 12 directly formed on the shaping surface is only required to be a covering layer which is constituted by a solid material having a release property and covers the shaping surface. Examples of the solid material having the release property include non-carbon resin materials, such as silicone resins and fluorocarbon resins. However, the solid material having the release property is not especially limited. It should be noted that the non-carbon resin material herein is not limited to a resin material not containing carbon atoms, but denotes that an element achieving the release property is a non-carbon element.

Specific examples of the silicone resins include methyl silicone resins, methyl phenyl silicone resins, phenyl silicone resins, alkyd modified silicone resins, polyester modified silicone resins, urethane modified silicone resins, epoxy modified silicone resins, and acryl modified silicone resins. However, the silicone resins are not especially limited. Normally, only one type of silicone resin is used. However, when a polymer alloy can be formed by mixing plural types of silicone reins, two or more types of silicone resins may be suitably combined and used.

Examples of the fluorocarbon resins include tetrafluoroethylene (PTEF), tetrafluoroethylene perfluoroalkoxy ethylene copolymer (PFA), polychlorotrifluoroethylene (PCTFE), polyvinylidene fluoride (PVDF), tetrafluoroethylene hexafluoropropylene copolymer (FEP), tetrafluoroethylene ethylene copolymer (ETFE), and ethylene chlorotrifluoroethylene ethylene copolymer (ECTFE). However, the fluorocarbon resins are not especially limited. Normally, only one type of fluorocarbon resin is used. However, when a polymer alloy can be formed by mixing plural types of fluorocarbon resins, two or more types of fluorocarbon resins may be suitably combined and used.

The release coating 12 is only required to contain the non-carbon resin material, such as silicone resin or fluorocarbon resin, as a component which achieves the release property. However, the release coating 12 may contain the non-carbon resin material as a major component (may be constituted by at least the non-carbon resin material). It should be noted that when the release coating 12 is formed by only the resin material, durability of the release coating 12 as the covering layer deteriorates in some cases. Therefore, a base material having durability may be used in the release coating 12 in addition to the resin material.

Typical examples of the base material used in the release coating 12 and having durability include inorganic materials, such as glass materials or ceramic materials. Especially, since the glass material is used as a coating material (glass coating) for use in general surface protection, the glass material can be suitably used in the present disclosure.

The typical glass coating is formed as a strong covering layer in such a manner that a silane compound, such as polysilazane, organopolysiloxane, or low molecular silane, is painted and cured by a reaction with moisture, and silica is a major component. In the present disclosure, particles of the non-carbon resin material, such as the silicone resin or the fluorocarbon resin, is mixed with the silane compound as a raw material in advance, and the obtained mixture is painted and cured. With this, the release coating 12 can be formed such that the glass coating is the base material, and the base material contains the silicone resin particles or the fluorocarbon resin particles.

Therefore, in the present disclosure, examples of the release coating 12 include at least two types of layers that are: a layer (resin major component coating) which is constituted by at least the non-carbon resin material and does not include the base material having durability; and a layer (base material major component coating) in which the particles of the non-carbon resin material are dispersed in the base material having durability.

When the non-carbon resin material is the silicone resin, examples of the release coating 12 include: a silicone resin major component coating which contains the silicone resin as the major component and contains various additives according to need ; and a base material major component silicone resin coating which contains the glass coating as the base material and contains the silicone resin particles in the base material. Similarly, when the non-carbon resin material is the fluorocarbon resin, examples of the release coating 12 include: a fluorocarbon resin major component coating which contains the fluorocarbon resin as the major component and contains various additives according to need; and a base material major component fluorocarbon resin coating which contains the glass coating as the base material and contains the fluorocarbon resin particles in the base material.

In the present disclosure, for example, the glass coating itself may realize the release property. For example, a fluorinated silane compound modified by fluorine is made to be contained in the silane compound used when forming the glass coating, and this is cured. With this, the glass coating can obtain the release property without the non-carbon resin material.

Moreover, the release coating 12 is not limited to the silicone resin coating, the fluorocarbon resin coating, the glass coating having the release property, and the like. The release coating 12 may be constituted by other materials as long as the release coating 12 is constituted by the solid material having the release property and can cover the shaping surface. For example, although it depends on the material of the laminated body (prepreg), a general resin material (carbon resin material) which can achieve the release property may be used for the release coating 12.

The release agent layer 13 covering the release coating 12 is only required to be a paint film formed such that when a semisolid or liquid release agent is painted on the surface of the release coating 12, the release agent is not repelled by the surface of the release coating 12 but covers the entire release coating 12. Therefore, various conditions, such as the type of the release agent and the thickness of the release agent layer 13, are not especially limited. Typically, since the release coating 12 has the release property, the release agent is constituted by at least a material which has affinity with a specific material of the release coating 12. More specifically, the release agent constituted by a material which is the same in type as or similar in type to the major component of the release coating 12 or the material achieving the release property.

For example, when the release coating 12 is the silicone resin coating, a silicone release agent is only required to be used as the release agent. Moreover, when the release coating 12 is the fluorocarbon resin coating, a fluorine release agent is only required to be used as the release agent. Moreover, when the release coating 12 is the glass coating having the release property, a release agent in which an element realizing the release property is included in a molecular structure is only required to be used. In the above-described example, the glass coating containing the fluorinated silane compound is used. In this case, a fluorine release agent is only required to be used as the release agent.

Moreover, the release coating 12 may be colored. When the release coating 12 is colored, it can be confirmed that the release coating 12 successfully covers the shaping surface. In addition, even when the release coating 12 becomes thin or is peeled off by repeatedly performing the removing, it can be confirmed easily.

When the major component of the release coating 12 is the silicone resin or the fluorocarbon resin (i.e., when the release coating 12 is practically constituted by the silicone resin or the fluorocarbon resin), such resin has low affinity with the other material (and therefore can achieve an excellent release action). On this account, a coloring agent cannot be adequately mixed or diffused in the resin, and therefore, the release coating 12 may not be successfully colored. On the other hand, when the release coating 12 includes the base material, such as the glass coating, and the base material contains the silicone resin particles or the fluorocarbon resin particles, the coloring agent is only required to be added to the base material. In the case of the glass coating, the coloring agent is only required to be added to the silane compound, and the obtained mixture is only required to be cured. With this, the release coating 12 can be easily colored.

A specific color when coloring the release coating 12 is not especially limited. The color of the release coating 12 is only required to be a color different from the color of the shaping surface of the die member, and preferably, a color by which a decrease in thickness of the release coating 12 or peel-off of the release coating 12 can be easily recognized is only required to be selected. For example, since the die member is typically made of metal, the shaping surface has metallic luster although it depends on the surface state. Since the metallic luster reflects light, the color of the metallic luster can be regarded as a color approximate to "white." In this case, "black" or "dark color" close to "black", i.e., a color that is low in brightness is only required to be selected. Or, since "white" is an achromatic color, a color having higher chroma may be selected.

Although it depends on the type of the coloring agent which colors the release coating 12, the color may fade by heating, pressurizing, or the like during the shaping. Moreover, as the coloring agent having high chroma, there exit more expensive coloring agents. In consideration of these conditions, a color which is relatively different in brightness and chroma from the color of the shaping surface, hardly fades, is lower in cost, and is easily dispersed in the base material or the like is only required to be suitably selected as the color of the release coating 12.

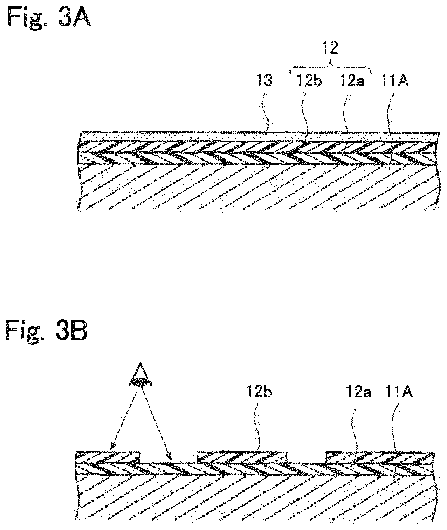

In the present disclosure, the release coating 12 may be a single layer as shown by the beam shaping die 10A in FIGS. 1A and 1B but may be constituted by plural layers. For example, FIG. 3A shows another example of the schematic partial sectional view of the beam shaping die 10A shown in FIG. 1A. In the configuration shown in FIG. 3A, a first release coating 12a is laminated on the surface (shaping surface) of the shaping die main body 11A, and a second release coating 12b is further laminated on an upper side of the first release coating 12a.

Therefore, as shown in the example of FIG. 3A, the release coating 12 has a two-layer configuration including the first release coating 12a and the second release coating 12b. The release agent layer 13 is laminated on an upper side of the release coating 12 having the two-layer configuration. In the example shown in FIG. 3A, the release agent layer 13 is further laminated on an upper side of the second release coating 12b located at the upper side. Although not shown, the release coating 12 may be constituted by three or more layers.

When the release coating 12 is constituted by plural layers as above, the layers constituting the release coating 12 may be colored in different colors from each other. For example, when the release coating 12 is constituted by two layers as shown in FIG. 3A, the first release coating 12a that is a lower layer (layer directly covering the shaping surface) may be colored in a color (for example, a reddish color) having high chroma, and the second release coating 12b that is an upper layer (layer which covers the lower layer and on which the release agent layer 13 is formed) may be colored in a color (for example, black or a color close to black) having low brightness.

For example, when repeatedly manufacturing the beams (composite material shaped products) that are the aircraft parts by using the beam shaping die 10A, the beams are repeatedly removed from the shaping surface. The release agent layer 13 is formed by the semisolid or liquid release agent. Therefore, even when the release agent layer 13 becomes thin or is partially peeled off at the time of the removing, application (paint) is only required to be performed again. On the other hand, when the release coating 12 becomes thin or is partially peeled off by repeating the removing, the release coating 12 cannot be easily formed again unlike the release agent layer 13. Therefore, by recognizing a decrease in thickness of the release coating 12 or peel-off of the release coating 12, successful removing of the composite material shaped product can be managed.

Therefore, as described above, for example, the second release coating 12b that is the upper layer is colored in a blackish color, and the first release coating 12a that is the lower layer is colored in a reddish color. As schematically shown in FIG. 3B, even when the release coating 12 is partially peeled off by repeating the removing, a portion having the reddish color (i.e., the color of the first release coating 12a) appears on the shaping surface which is originally in the blackish color (i.e., the color of the second release coating 12b). With this, a user can visually confirm abrasion or peel-off of the release coating 12. It should be noted that in FIG. 3B, for convenience of explanation, the release agent layer 13 on the second release coating 12b is not shown.

As above, a composite material shaped product manufacturing shaping die according to the present disclosure is a shaping die used to, when manufacturing a composite material shaped product constituted by at least a resin composition and a fiber material, shape a laminated body of prepregs each formed by impregnating the fiber material with the resin composition. The shaping die includes a die member including a shaping surface defining an outer surface shape of the laminated body. The shaping surface includes a release coating covering the shaping surface and a release agent layer formed on the release coating by applying a release agent to the release coating.

Moreover, a method of manufacturing a composite material shaped product according to the present disclosure is a method of manufacturing a composite material shaped product constituted by at least a resin composition and a fiber material. The method includes: covering a shaping surface with a release coating, the shaping surface defining an outer surface shape of a laminated body of prepregs each formed by impregnating the fiber material with the resin composition; applying a release agent to the release coating to form a release agent layer on the release coating; and shaping the laminated body in a state where an outer surface of the laminated body is in tight contact with the release agent layer.

According to the above configuration, the release coating is formed on the shaping surface in advance, and the release agent layer is formed on the release coating. To be specific, the shaping surface of the shaping die is subjected to the double coating, i.e., the release coating and the release agent layer are formed on the shaping surface of the shaping die. By this double coating, the excellent removing property can be maintained. Moreover, since it is unnecessary to apply the release agent each time the removing is performed, the frequency of application of the release agent can be reduced. Furthermore, the deposition of the release agent can be adequately suppressed. Since the formation of the release coating is only required to be performed basically only once, the execution of the releasing treatment each time the removing is performed can be avoided. With this, the composite material shaped product manufacturing shaping die can be obtained, which realizes the successful removing by the release agent, avoids the execution of the releasing treatment each time the removing is performed, and can suppress the deposition of the release agent.

### Examples

The present invention will be more specifically described based on Examples and Comparative Examples. However, the present invention is not limited to these. Various modifications, corrections, and changes may be made by a skilled person within the scope of the present invention.

### Example 1

A commercially available silicone resin release coating was formed on the shaping surface of the beam shaping die (die member), and the release agent layer was formed on the silicone resin coating by applying a commercially available silicone release agent 1 to the silicone resin coating. By using this shaping die, the beams as the composite material shaped products were shaped and removed ten times or more. Each of the formation of the release coating and the application of the release agent layer was performed only once. All the beams were successfully shaped and removed without the reapplication of the release agent layer.

### Example 2

The beams as the composite material shaped products were shaped and removed ten times or more in the same manner as Example 1 except that as the release agent layer, a commercially available silicone release agent 2 was used instead of the silicone release agent 1. Each of the formation of the release coating and the application of the release agent layer was performed only once. All the beams were successfully shaped and removed without the reapplication of the release agent layer.

### Comparative Example 1

The release coating was not formed on the shaping surface of the beam shaping die, but only the release agent layer was formed on the shaping surface of the beam shaping die by applying the silicone release agent 1 to the shaping surface of the beam shaping die. By using this shaping die, the beams as the composite material shaped products were shaped and removed about three to five times, and after that, the successful removing could not be performed any more. Moreover, when the removing was repeatedly performed while applying the release agent layer each time the removing was performed, the release agent layer deposited on the shaping surface was transferred to the surface of the beam. Therefore, the surface roughness of the beam deteriorates. In addition, in nondestructive inspection, ultrasonic transmission was not successfully performed, and the release agent needed to be removed by sanding.

### Comparative Example 2

Only the silicone resin coating as the release coating was formed on the shaping surface of the beam shaping die, and the release agent layer was not formed. By using this shaping die, the beams as the composite material shaped products were shaped and removed thirty times. After that, part of the release coating was peeled off, and recoating was required. Moreover, a deterioration timing of the release coating is unpredictable. Therefore, when the release coating was peeled off, pieces of the release coating were mixed with the beam, and this deteriorated the quality of the beam (composite material shaped product).

### Comparisons between Examples and Comparative Examples

According to comparisons between Examples and Comparative Examples, by applying the release agent, the material of which is the same in type as the material of the release coating, to the release coating, double coat can be realized on the shaping surface, i.e., the release coating and the release agent layer can be formed on the shaping surface. Specific affinity between the release coating and the release agent is not especially limited. However, as described above, it is preferable that the material of the release coating and the material of the release agent be the same in type as each other (i.e., both the material of the release coating and the material of the release agent be silicone).

Moreover, when the double coat is realized by the release coating and the release agent layer, the release agent layer may serves as a protective membrane for the release coating, and therefore, the reformation of the release coating can be avoided or suppressed. Moreover, by the double coat, the frequency of reapplication of the release agent layer can be significantly lowered. According to the above Examples, the removing can be performed at least ten times. Therefore, the frequency of application of the release agent layer can be reduced to at least 1/10. As above, since the reformation of the release coating and the reformation of the release agent layer can be avoided or suppressed, the cost for the releasing treatment can be successfully reduced. Moreover, since the frequency of application of the release agent layer can be lowered, the amount of deposition of the release agent layer on the shaping surface can be reduced.

Furthermore, by the double coat, the release coating is hardly peeled off, and the release agent layer is hardly deposited. Therefore, the mixing of the peeled release coating in the composite material shaped product and the transferring of the release agent layer to the composite material shaped product can be avoided or suppressed. With this, the product quality of the obtained composite material shaped product can be made excellent.

As above, a composite material shaped product manufacturing shaping die according to the present disclosure may be a shaping die used to, when manufacturing a composite material shaped product constituted by at least a resin composition and a fiber material, shape a laminated body of prepregs each formed by impregnating the fiber material with the resin composition. The shaping die may include a die member including a shaping surface defining an outer surface shape of the laminated body. The shaping surface may include a release coating covering the shaping surface and a release agent layer formed on the release coating by applying a release agent to the release coating.

According to the above configuration, the release coating is formed on the shaping surface in advance, and the release agent layer is formed on the release coating. To be specific, the shaping surface of the shaping die is subjected to the double coating, i.e., the release coating and the release agent layer are formed on the shaping surface of the shaping die. By this double coating, the excellent removing property can be maintained. Moreover, since it is unnecessary to apply the release agent each time the removing is performed, the frequency of application of the release agent can be reduced. Furthermore, the deposition of the release agent can be adequately suppressed. Since the formation of the release coating is only required to be performed basically only once, the execution of the releasing treatment each time the removing is performed can be avoided. With this, the composite material shaped product manufacturing shaping die can be obtained, which realizes the successful removing by the release agent, avoids the execution of the releasing treatment each time the removing is performed, and can suppress the deposition of the release agent.

In the composite material shaped product manufacturing shaping die configured as above, the release agent may be constituted by at least a material having affinity with the release coating.

Moreover, in the composite material shaped product manufacturing shaping die configured as above, the release coating may contain a non-carbon resin material.

Moreover, in the composite material shaped product manufacturing shaping die configured as above, the release coating may be a silicone resin coating that is the non-carbon resin material, and the release agent may be a silicone release agent.

Moreover, in the composite material shaped product manufacturing shaping die configured as above, the silicone resin coating may include a glass coating as a base material, and the base material may contain silicone resin particles.

Moreover, in the composite material shaped product manufacturing shaping die configured as above, the release coating may be a fluorocarbon resin coating that is the non-carbon resin material, and the release agent may be a fluorine release agent.

Moreover, in the composite material shaped product manufacturing shaping die configured as above, the fluorocarbon resin coating may include a glass coating as a base material, and the base material may contain fluorocarbon resin particles.

Moreover, in the composite material shaped product manufacturing shaping die configured as above, the release coating may be colored.

Moreover, in the composite material shaped product manufacturing shaping die configured as above, the release coating may be constituted by plural layers laminated on each other, and the plural layers may be colored in different colors from each other.

Moreover, in the composite material shaped product manufacturing shaping die configured as above, the resin composition may be a thermosetting resin composition or a thermoplastic resin composition.

Moreover, in the composite material shaped product manufacturing shaping die configured as above, the composite material shaped product may be an aircraft part.

A method of manufacturing a composite material shaped product according to the present disclosure may be a method of manufacturing a composite material shaped product constituted by at least a resin composition and a fiber material. The method may include: covering a shaping surface with a release coating, the shaping surface defining an outer surface shape of a laminated body of prepregs each formed by impregnating the fiber material with the resin composition; applying a release agent to the release coating to form a release agent layer on the release coating; and shaping the laminated body in a state where an outer surface of the laminated body is in tight contact with the release agent layer.

From the foregoing explanation, many modifications and other embodiments of the present invention are obvious to one skilled in the art. Therefore, the foregoing explanation should be interpreted only as an example and is provided for the purpose of teaching the best mode for carrying out the present invention to one skilled in the art. The structures and/or functional details may be substantially modified within the scope of the present invention.

### Industrial Applicability

The present invention can be widely and suitably used in a field of manufacturing composite material shaped products, especially when manufacturing composite material shaped products, such as aircraft parts, which require higher quality than general products.

### Reference Signs List

10A beam shaping die (composite material shaped product manufacturing shaping die)
10B frame shaping die (composite material shaped product manufacturing shaping die)
10C skin shaping die (composite material shaped product manufacturing shaping die)
11A shaping die main body (die member)
11B shaping die main body (die member)
11C shaping die main body (die member)
12 release coating
12a first release coating
12b second release coating
13 release agent layer

## Claims

1. A composite material shaped product manufacturing shaping die being a shaping die used to, when manufacturing a composite material shaped product constituted by at least a resin composition and a fiber material, shape a laminated body of prepregs each formed by impregnating the fiber material with the resin composition,
the shaping die comprising a die member including a shaping surface defining an outer surface shape of the laminated body, wherein
the shaping surface includes
a release coating covering the shaping surface and
a release agent layer formed on the release coating by applying a release agent to the release coating.

2. The composite material shaped product manufacturing shaping die according to claim 1, wherein the release agent is constituted by at least a material having affinity with the release coating.

3. The composite material shaped product manufacturing shaping die according to claim 1 or 2, wherein the release coating contains a non-carbon resin material.

4. The composite material shaped product manufacturing shaping die according to claim 3, wherein:
the release coating is a silicone resin coating that is the non-carbon resin material; and
the release agent is a silicone release agent.

5. The composite material shaped product manufacturing shaping die according to claim 4, wherein:
the silicone resin coating includes a glass coating as a base material; and
the base material contains silicone resin particles.

6. The composite material shaped product manufacturing shaping die according to claim 3, wherein:
the release coating is a fluorocarbon resin coating that is the non-carbon resin material; and
the release agent is a fluorine release agent.

7. The composite material shaped product manufacturing shaping die according to claim 6, wherein:
the fluorocarbon resin coating includes a glass coating as a base material; and
the base material contains fluorocarbon resin particles.

8. The composite material shaped product manufacturing shaping die according to any one of claims 1 to 7, wherein the release coating is colored.

9. The composite material shaped product manufacturing shaping die according to claim 8, wherein:
the release coating is constituted by plural layers laminated on each other; and
the plural layers are colored in different colors from each other.

10. The composite material shaped product manufacturing shaping die according to any one of claims 1 to 8, wherein the resin composition is a thermosetting resin composition or a thermoplastic resin composition.

11. The composite material shaped product manufacturing shaping die according to any one of claims 1 to 9, wherein the composite material shaped product is an aircraft part.

12. A method of manufacturing a composite material shaped product constituted by at least a resin composition and a fiber material,
the method comprising:
covering a shaping surface with a release coating, the shaping surface defining an outer surface shape of a laminated body of prepregs each formed by impregnating the fiber material with the resin composition;
applying a release agent to the release coating to form a release agent layer on the release coating; and
shaping the laminated body in a state where an outer surface of the laminated body is in tight contact with the release agent layer.
